# EUROPÄISCHE PATENTSCHRIFT

(11) **EP 1 832 452 B1**
(45) Veröffentlichungstag und Bekanntmachung des Hinweises auf die Patenterteilung: **24.11.2010**
(21) Anmeldenummer: 07003538.1
(22) Anmeldetag: 21.02.2007
(51) Int. Cl.: B60H 1/34

(54) **Luftausströmer mit visueller Rückmeldung**
Air outlet with visual feedback
Dispositif d'écoulement d'air avec rétrosignal visuel

(30) Priorität: 08.03.2006 DE 102006011125
(43) Veröffentlichungstag der Anmeldung: 12.09.2007
(73) Patentinhaber: Behr GmbH & Co. KG, 70469 Stuttgart (DE)
(72) Erfinder: Klingler, Dietrich, 73540 Heubach (DE); Röhm, Klaus, 71394 Kernen i.R. (DE)

(56) Entgegenhaltungen:
- DE-A1-102004 038 016
- DE-U1- 20 118 014
- FR-A- 2 816 251
- JP-A- 6 058 616
- US-B1- 6 437 704

## Beschreibung

Die Erfindung betrifft einen Luftausströmer, insbesondere für ein Kraftfahrzeug, der auch bei schwachem Umgebungslicht eine visuelle Einschätzung seines Betriebszustands erlaubt.

Luftausströmer in Kraftfahrzeugen verfügen meist über Vorrichtungen zur Regulierung von Betriebszuständen, wie z.B. der ausströmenden Luftmenge, der Richtung des Luftstromes und gegebenenfalls der Strömungscharakteristik. Ein solcher Luftausströmer ist aus der DE 10 2004 038 016 A1 bekannt. Bei ausreichender Beleuchtung, z. B. tagsüber, sind die eingestellten Betriebszustände von einem Fahrer des Kraftfahrzeuges in aller Regel mit einem Blick zu erfassen und lassen sich ebenso unkompliziert und intuitiv bedienen. Bei schlechten Lichtverhältnissen jedoch, wie z.B. nachts, erfordert die Überprüfung und Einstellung dieser Vorrichtungen einen höheren Grad an Aufmerksamkeit, da die Luftausströmer und umso mehr die Vorrichtungen schlecht sichtbar sind. Lösungsansätze, bei denen diese Vorrichtungen teilweise verchromt oder chromatiert sind, helfen dem Problem nicht ab.

Es ist daher Aufgabe der vorliegenden Erfindung, einen Luftausströmer anzugeben, der eine Kontrolle über die eingestellten Betriebszustände auch bei schlechten Lichtverhältnissen erlaubt.

Die Aufgabe wird gelöst durch einen Luftausströmer mit den Merkmalen des Anspruchs 1.

Vorteilhafte Weiterbildungen sind Gegenstand der untergeordneten Ansprüche.

Der erfindungsgemäße Luftausströmer umfasst mindestens ein Bauelement, welches von einem durch den Luftausströmer zu belüftenden Raum aus sichtbar ist und von einem durch den Luftausströmer ausströmbaren Luftstrom benetzbar ist. Das Bauelement ist zumindest teilweise aus einem lichtleitfähigen Material gebildet und es kann ihm Licht zugeführt werden. Wenn dem Bauelement Licht zugeführt wird, sind zumindest die Teile, die aus dem lichtleitfähigen Material gebildet sind, vom zu belüftenden Raum aus auch bei Dunkelheit sichtbar, so dass ein Fahrer eines Kraftfahrzeuges, dessen Innenraum belüftet wird, sich mühelos über eingestellte Betriebszustände des Luftausströmers informieren kann. Durch das leuchtende Bauteil wird hierfür nur ein geringer Teil der Aufmerksamkeit des Fahrers benötigt, so dass die Verkehrssicherheit unbeeinträchtigt bleibt.

Bevorzugt ist das Bauelement als ein Luftkanal, insbesondere für einen direkten, strahlförmigen Luftaustritt, ausgebildet. Auf diese Weise kann der Fahrer kontrollieren und gegebenenfalls einstellen, in welche Richtung der Luftstrom austritt. Das gilt insbesondere dann, wenn der Luftkanal als länglicher Hohlkörper mit offenen Enden ausgebildet ist und eine in Normalrichtung zu einer längs liegenden Symmetrieachse ausgerichtete Achse (auch Luftkanalachse genannt) aufweist und um diese Achse schwenkbar ist, so dass ein Schwenken des Luftkanals die Richtung des Luftstroms ändert. Eine solche Anordnung wird insbesondere zum Schwenken in horizontaler Richtung benutzt. Zweckmäßigerweise ist die Achse ein Bestandteil des Luftkanals, um die Lichtleitung zwischen Achse und Luftkanal nicht zu behindern, da die Achse sich besonders zum Einkoppeln des Lichtes in den Luftkanal eignet.

In einer bevorzugten Ausführungsform weist der Luftausströmer eine Vorrichtung zur Beeinflussung der Richtung des Luftstromes an einer dem zu belüftenden Raum zugewandten Seite des Luftausströmers auf, die die Richtung des Luftstrom mittels wenigstens einer Lamelle, insbesondere in vertikaler Richtung, beeinflusst. In diesem Falle ist die Lamelle als Bauelement lichtleitfähig ausgeführt, so dass der Fahrer auch für diese Richtung des Luftstroms eine einfache Kontrollmöglichkeit erhält.

Diese Lamelle weist vorzugsweise eine in Längsrichtung angeordnete Achse (auch Lamellenachse genannt) auf, um die sie schwenkbar ist. Eine solche Achse gewährt eine einfache Schwenkmöglichkeit. Die Achse eignet sich besonders zum Einkoppeln des Lichtes. Im Interesse einer verlustarmen Lichtleitung ist die Achse ein Bestandteil der Lamelle.

Wird das Licht dem Bauelement an einer Stirnfläche zumindest eines Endes einer Achse (z.B. der Lamellenachse oder der Luftkanalachse) zugeführt, entfällt die Notwendigkeit, eine Lichtquelle oder ein Lichtübertragungsmedium so an das Bauelement anschließen zu müssen, dass es dessen Bewegungen folgt und damit Verschleiß unterliegt.

Gleiches gilt, wenn das Licht dem Bauelement über eine andere Fläche zumindest eines Endes der Achse zugeführt wird, z.B. bei zylindrischen Achsen über die Zylinderfläche.

Für diesen Fall eignet sich besonders der Einsatz eines zumindest teilweise lichtleitfähigen Lagerelements, dem seinerseits Licht zuführbar ist. Bei Verwendung mehrerer Lamellen sind in dem Lagerelement zweckmäßigerweise mehrere, der Anzahl der Lamellen entsprechende Lager vorgesehen. Eine geeignete Mechanik sorgt für ein synchrones Schwenken aller Lamellen, sobald eine einzelne Lamelle geschwenkt wird. Alternativ können die Lamellen mittels eines geeigneten Verstellmechanismus auch asynchron verschwenkt werden.

In einer bevorzugten Ausführungsform ist als Bauelement ein lichtleitfähiger Reiterverstellknopf auf einer Lamelle längsverschiebbar angeordnet, dem aus dieser Lamelle Licht zuführbar ist. Ein solcher Reiterverstellknopf dient der Betätigung einer Verstellkinematik, z.B. eines Gestänges, welches seinerseits eine Schwenkung des Luftkanals hervorruft. Auf diese Weise ist die horizontale Schwenkrichtung des Luftstroms alternativ oder zusätzlich visualisierbar. Eine solche zusätzliche, also redundante Information ist kognitiv vorteilhaft, weil sie den Fahrer die Situation schneller erfassen lässt.

Anstelle eines Reiterverstellnopfs kann als lichleitfähiges Bauelement zur Verstellung auch ein Joystick, ein Kugelverstellknopf, ein Hebelmechanismus, ein Verstellrad oder Ähnliches zum Einsatz kommen, welche bevorzugt außerhalb des Luftausströmers oder des Luftkanals angeordnet sind.

Die Zuführung des Lichtes in das Bauelement und/oder das Lagerelement erfolgt durch eine daran angebrachte Lichtquelle und/oder durch ein Gehäuse, in dem die Lichtquelle angeordnet ist. Für eine besonders effiziente Einkoppelung weist das Gehäuse hierfür ein lichtleitfähiges Prisma, z.B. aus Kunststoff, auf. Das Bauelement und/oder das Lagerelement verfügen über eine zu diesem Prisma komplementäre Einsteckvorrichtung, um das Prisma aufnehmen zu können.

In einer weiteren Ausführungsform der Erfindung ist dem Bauelement und/oder dem Lagerelement Licht aus einer Lichtleitfaser zuführbar, in die ihrerseits Licht aus der Lichtquelle einkoppelbar ist. Auf diese Weise kann auch ein Luftausströmer mit einer komplizierten Geometrie und vielen zu beleuchtenden Bauelementen mit nur einer Lichtquelle betrieben werden.

Vorzugsweise ist die Lichtquelle als Leuchtdiode (LED) ausgebildet. Der geringe Leistungsbedarf einer Leuchtdiode ist sowohl aus ökonomischen Gründen als auch wegen der infolgedessen geringen Wärmeabgabe vorteilhaft.

Die Lichtquelle kann vorteilhafterweise Licht in einer oder mehrerer der Farben weiß, gelb (λ=550 bis 590 nm), orange (λ=585 bis 620 nm), grün (λ=520 bis 565 nm), rot (λ=625 bis 740 nm) oder blau (λ=450 bis 500 nm) emittieren. Auf diese Weise kann ein dem Design des Innenraumes angepasster Gesamteindruck sichergestellt werden.

In einer weiteren Ausführungsform ist das lichtleitfähige Material zumindest teilweise farbig ausgeführt. Auf diese Weise kann der optische Eindruck auch mit einer weißen Lichtquelle auf einfache Weise angepasst werden.

Vorzugsweise ist das Bauelement und/oder das Lagerelement zumindest teilweise mit einem lichtundurchlässigen Lack lackiert, so dass Licht nur an den nicht lackierten Stellen aus dem Bauelement und/oder dem Lagerelement austritt. Für das Lagerelement lässt sich sicherstellen, dass das Licht nur an den Lagerstellen für die Achsen austritt, wenn alle anderen Bereiche, abgesehen von der Stelle, an der das Licht eingekoppelt wird, lackiert sind. Beim Bauelement werden entsprechend nur die zum Einkoppeln von Licht benutzen Enden der Achsen und die zum Leuchten bestimmten Teile nicht lackiert. Im Falle des Reiterverstellknopfes muss die Lamelle in dem Bereich, auf der der Reiterverstellknopf längsverschiebbar angeordnet ist, eine nichtlackierte Fläche aufweisen. Ebenso benötigt der Reiterverstellknopf eine dazu passende, nicht lackierte Fläche, um das Licht aus der Lamelle einkoppeln zu können. Bei ausreichender Beleuchtung wird dem Bauelement kein Licht zugeführt und es erscheint in der Farbe des lichtundurchlässigen Lackes.

Die gleiche Wirkung ist auf einfachere Weise erreichbar, wenn der lichtundurchlässige Lack an mindestens einer ausgewählten Stelle vom Bauelement entfernt ist. In diesem Fall könnte das Bauelement zunächst komplett lackiert und dann der Lack den Designvorgaben entsprechend teilweise entfernt werden, z.B. mittels eines Lasers.

Eine vergleichbare Wirkung wird mit einer Ausführungsform erreicht, bei der das Bauelement und/oder das Lagerelement mindestens eine lichtundurchlässige Materialkomponente enthält, so dass es aus mindestens zwei Komponenten, einer lichtleitfähigen und einer lichtundurchlässigen, aufgebaut ist. Das Bauelement lässt sich auf diese Weise so gestalten, dass es nur an den Stellen leuchtet und Licht leitet, die aus der lichtleitfähigen Komponente gebildet sind, um so ein gewünschtes Erscheinungsbild zu erreichen.

Ausführungsbeispiele der Erfindung werden anhand von Zeichnungen näher erläutert. Darin zeigen:
- Fig. 1: eine perspektivische Darstellung eines Luftausströmers mit zwei Luftkanälen,
- Fig. 2: eine Darstellung eines Luftkanals mit einer Achse für eine schwenkbare Lagerung,
- Fig. 3: eine perspektivische Darstellung einer Vorrichtung zur Beeinflussung einer Richtung des Luftstroms mit Lamellen und einem Reiterverstellknopf,
- Fig. 4: eine perspektivische Darstellung eines Lagerelementes und
- Fig. 5: eine perspektivische Darstellung einer Lamelle.

Einander entsprechende Teile sind in allen Figuren mit den gleichen Bezugszeichen versehen.

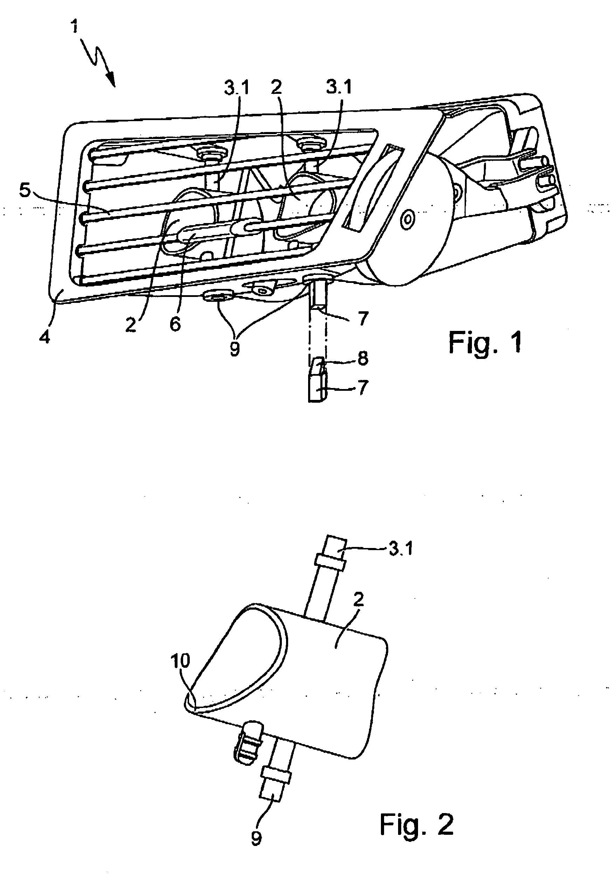

In Fig. 1 ist ein Luftausströmer 1 mit zwei Luftkanälen 2 gezeigt, die mit jeweils einer Achse (= Luftkanalachse) 3.1 einstückig ausgebildet sind. An einer dem zu belüftenden Raum zugewandten Seite des Luftausströmers 1 ist eine Vorrichtung 4 zur Beeinflussung einer Richtung eines Luftstroms vorgesehen, die mit Lamellen 5 versehen ist. Auf einer der Lamellen 5 ist ein Reiterverstellknopf 6 längsverschiebbar angeordnet, der der Betätigung einer nicht dargestellten Verstellkinematik zur Veränderung der Richtung des Luftstromes dient. Eine Lichtquelle, insbesondere eine Leuchtdiode, ist in einem Gehäuse 7 mit einem Prisma 8 angeordnet. Zur Aufnahme dieses Gehäuses 7 weist der untere Teil der Achse 3.1 an seiner Stirnfläche eine Einsteckvorrichtung 9 auf, die komplementär zum Gehäuse 7 gebildet ist.

Die Luftkanäle 2 sind um ihre Achsen 3.1 schwenkbar, so dass die Richtung des Luftstroms in horizontaler Richtung beeinflusst werden kann. Die Betätigung erfolgt mit dem Reiterverstellknopf 6.

Das Gehäuse 7 ist zur besseren Veranschaulichung einmal in die EinsteckVorrichtung 9 eingesetzt und einmal separat dargestellt

In Fig. 2 ist ein Luftkanal 2 aus dem in Fig. 1 dargestellten Luftausströmer gezeigt, der insbesondere zum Ausströmen eines direkten, strahlförmigen Luftstroms geeignet ist. Der Luftkanal 2 und die Achse 3.1 sind aus einem lichtleitfähigen Material gebildet und mit einem lichtundurchlässigen Lack lackiert, der an der Einsteckvorrichtung 9 und am vorderen Rand 10 des Luftkanals 2 mit einem Laser gezielt entfernt wurde, so dass von einem Fahrer eines Kraftfahrzeuges, in dem der Luftausströmer 1 angeordnet ist, nur der leuchtende Rand 10 des Luftkanals 2 wahrgenommen wird. Die Achse 3.1 ist nicht durchgängig ausgeführt, sondern in der Art von Halbachsen oben und unten an dem Luftkanal 2 angebracht. Eine durchgängige Ausführung wäre jedoch auch möglich.

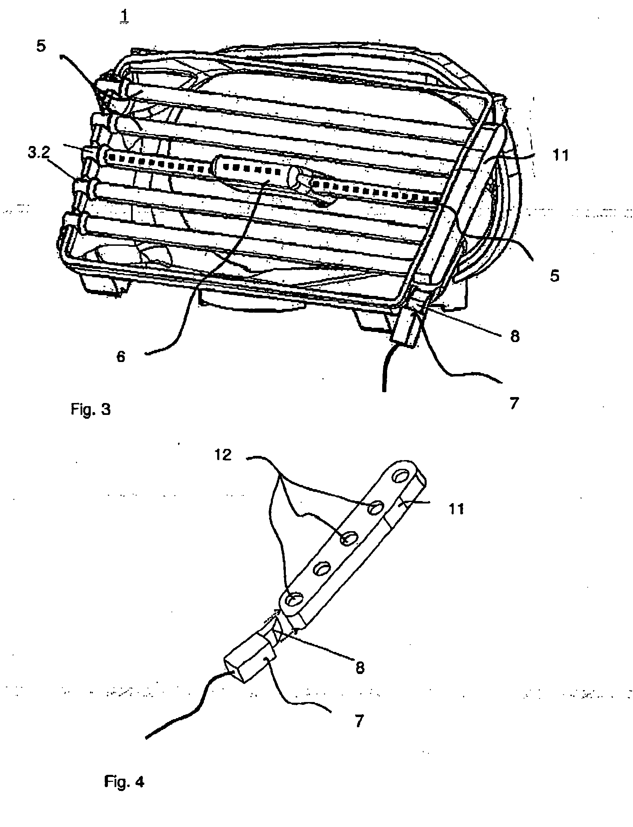

In Fig. 3 ist eine weitere Ausführungsform eines Luftausströmers 1 gezeigt, der an der dem zu belüftenden Raum zugewandten Seite des Luftausströmers 1 eine Vorrichtung 4 zur Beeinflussung der Richtung des Luftstroms aufweist, die mit Lamellen 5 versehen ist. Die Lamellen 5 weisen jeweils eine längs liegende Achse (=Lamellenachse) 3.2 auf, um die sie schwenkbar sind, um die Richtung des Luftstroms in vertikaler Richtung zu beeinflussen. Durch eine geeignete, hier nicht gezeigte, Mechanik wird erreicht, dass das Schwenken einer Lamelle 5 ein synchrones Schwenken aller anderen Lamellen 5 bewirkt. Auf einer der Lamellen 5 ist ein Reiterverstellknopf 6 zum Betätigen einer anderen Vorrichtung, insbesondere eines in Fig. 1 und Fig. 2 gezeigten Luftkanals, längsverschiebbar angeordnet.

Auf der rechten Seite sind die Achsen 3.2 der Lamellen 5 in einem Lagerelement 11 gelagert, welches eine hier verdeckte Einsteckvorrichtung 9 zur Aufnahme eines mit einem Prisma 8 versehenen Gehäuses 7 einer Lichtquelle aufweist. Die Einsteckvorrichtung 9 ist komplementär zur Form des Gehäuses 7 geformt. Das Lagerelement 11, die Lamellen 5, die mit den Lamellen 5 einstückig verbundenen Achsen 3.2 und der Reiterverstettknopf 6 sind aus einem lichtleitfähigen Material gefertigt und mit einem lichtundurchlässigen Lack lackiert. Dieser ist an den zum Lichtaustritt vorgesehenen Stellen und in den für die Lichtweitedeitung zwischen den Einzelteilen benötigten Bereichen entfernt, z.B. mit Hilfe eines Lasers.

In Fig. 4 ist ein Lagerelement 11, wie es in dem Luftausströmer 1 aus Fig. 3 verwendet wird, aus einer anderen Perspektive gezeigt, so dass die Lager 12, in denen die Achsen 3.2 der Lamellen 5 gelagert sein können, sichtbar werden. Ebenso ist das mit einem Prisma 8 versehene Gehäuse 7 der Lichtquelle in der Position gezeigt, in der es in die Einsteckvorrichtung 9 eingesetzt werden kann. Das Lagerelement 11 ist aus lichtleitfähigem Material gefertigt und mit einem lichtundurchlässigen Lack lackiert. An der Einsteckvorrichtung 9 und an den Lagern 12 wurde der Lack mit einem Laser entfernt, um Ein- und Austreten des Lichtes zu ermöglichen.

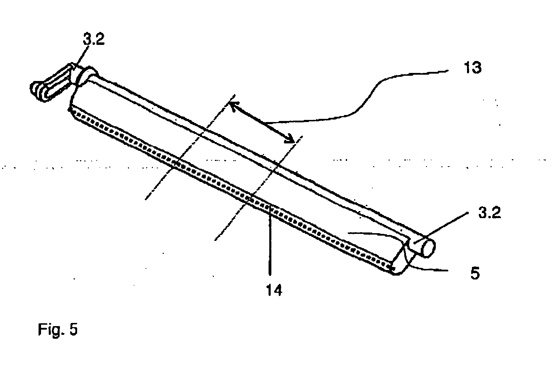

Fig. 5 zeigt eine Lamelle 5, wie sie in einem Luftausströmer 1 aus Fig. 3 verwendet wird. Die Lamelle 5 ist aus einem lichtleitfähigen Material gebildet und mit einem lichtundurchlässigen Lack lackiert. Im Bereich der Achse 3.2 auf der rechten Seite und an den durch Punkte angedeuteten Stellen an der dem zu belüftenden Raum zugewandten Vorderkante 14 der Lamelle 5 ist der Lack mittels eines Lasers entfernt. Licht kann in die Mantelfläche und/oder Stirnfläche der Achse 5 aus dem Lager 12 des Lagerelementes 11 eingekoppelt werden. An der Vorderkante 14 der Lamelle 5 ist die Anordnung eines Reiterverstellknopfes 6 vorgesehen, der innerhalb des Verstellbereiches 13 auf der Lamelle 5 längsverschofben werden kann. Insbesondere innerhalb dieses Verstellbereiches 13 muß die Lamelle 5 eine Fläche aufweisen, die nicht mit dem lichtundurchlässigen Lack bedeckt ist.

Der in Fig. 3 sichtbare, aus lichtleitfähigem Material gebildete und mit einem lichtundurchlässigen Lack lackierte Reiterverstellknopf 6 weist auf seiner komplementär zur Form der Lamelle 5 gebildeten, nicht gezeigten Rückseite, ebenfalls eine Fläche auf, die nicht mit dem lichtundurchlässigen Lack bedeckt ist, so dass Licht aus der Lamelle 5 in den Reiterverstellknopf 6 eingekoppelt werden kann. Außerdem ist der Lack an der dem zu belüftenden Raum zugewandten Seite des Reiterverstellknopfes 6 stellenweise entfernt, um einen den Designvorgaben entsprechenden Lichtaustritt zu ermöglichen.

In allen gezeigten Ausführungsbeispielen kommen auch andere Lichtquellen, z.B. Glühlampen, in Frage.

Alternativ zur Verwendung eines Gehäuses 7 könnte die Lichtquelle auch direkt in eine entsprechend angepasste Einsteckvorrichtung 9, auch an anderer Stelle des Luftkanals 2, der Lamelle 5, des Reiterverstellknopfes 6 und/oder des Lagerelementes 11, eingesetzt werden. Möglich wäre auch das Einkoppeln von Licht aus einer Lichtleitfaser- Andere als die gezeigten Formen für das Gehäuse 7 sind möglich.

Einsteckvorrichtungen 9 und/oder Lagerelemente 11 können an beiden Enden der Achsen 3.1, 3.2 vorgesehen sein.

Alternativ zum selektiven Entfernen des lichtundurchlässigen Lackes können der Luftkanal 2, die Lamelle 5, der Reiterverstellknopf 6 oder das Lagerelement 11 selektiv mit dem lichtundurchlässigen Lack lackiert sein, so dass dieser nicht in einem weiteren Arbeitsschritt entfernt werden muss. Ebenso können der Luftkanal 2, die Lamelle 5, der Reiterverstellknopf 6 oder das Lagerelement 11 eine weitere lichtundurchlässige Materialkomponente enthalten, die deren Oberfläche an all den Stellen bildet, aus denen kein Licht austreten soll.

Das lichtleitfähige Material kann farbig sein.

Die Lichtquelle kann Licht der Farben weiß, gelb (λ=550 bis 590 nm), orange (λ=585 bis 620 nm), grun (λ=520 bis 565 nm), rot (λ=625 bis 740 nm) oder blau (λ=450 bis 500 nm) emittieren.

## Patentansprüche

1. Luftausströmer (1), umfassend mindestens ein Bauelement, welches von einem durch den Luftausströmer (1) zu belüftenden Raum aus sichtbar ist und von einem durch den Luftausströmer (1) ausströmbaren Luftstrom benetzbar ist, wobei das Bauelement zumindest teilweise aus einem lichtleitfähigen Material gebildet und diesem Bauelement Licht zuführbar ist, wobei an dem Bauelement und/oder an dem Lagerelement (11) ein Gehäuse (7) angeordnet ist, in dem eine Lichtquelle angeordnet ist **dadurch gekennzeichnet, dass** das Gehäuse (7) ein lichtleitfähiges Prisma (8) zum Auskoppeln des Lichtes aufweist und das Bauelement und/oder das Lagerelement (11) eine Einsteckvorrichtung (9) zum Einkoppeln des Lichtes aufweist, die zur Aufnahme des Prismas (8) geeignet ist.

2. Luftausströmer (1) nach Anspruch 1, **dadurch gekennzeichnet, dass** das Bauelement als ein Luftkanal (2) ausgebildet ist.

3. Luftausströmer (1) nach Anspruch 2, **dadurch gekennzeichnet, dass** der Luftkanal (2) als ein länglicher Hohlkörper mit offenen Enden ausgebildet ist und eine in Normalrichtung zu einer längs liegenden Symmetrieachse ausgerichtete Achse (3.1) aufweist, um die er schwenkbar ist, wobei die Achse (3.1) ein Bestandteil des Luftkanals (2) sein kann.

4. Luftausströmer (1) nach einem der vorhergehenden Ansprüche, **dadurch gekennzeichnet, dass** eine Vorrichtung (4) zur Beeinflussung einer Richtung des Luftstroms an einer dem zu belüftenden Raum zugewandten Seite des Luftausströmers (1) vorgesehen ist, wobei das Bauelement als eine Lamelle (5) dieser Vorrichtung (4) ausgebildet ist.

5. Luftausströmer (1) nach Anspruch 4, **dadurch gekennzeichnet, dass** die Lamelle (5) eine längs angeordnete Achse (3.2) aufweist, um die sie schwenkbar ist, wobei die Achse (3.2) ein Bestandteil der Lamelle (5) sein kann.

6. Luftausströmer (1) nach einem der Ansprüche 3 bis 5, **dadurch gekennzeichnet, dass** das Licht dem Bauelement an einer Stirnfläche zumindest eines Endes der Achse (3.1, 3.2) zuführbar ist.

7. Luftausströmer (1) nach einem der Ansprüche 3 bis 6, **dadurch gekennzeichnet, dass** das Licht dem Bauelement über eine andere Fläche zumindest eines Endes der Achse (3.1, 3.2) zuführbar ist.

8. Luftausströmer (1) nach einem der Ansprüche 3 bis 7, **dadurch gekennzeichnet, dass** die Achse (3.1, 3.2) in einem zumindest teilweise lichtleitfähigen Lagerelement (11) gelagert ist, dem Licht zuführbar ist.

9. Luftausströmer (1) nach einem der Ansprüche 4 bis 8, **dadurch gekennzeichnet, dass** das Bauelement als ein Reiterverstellknopf (6), insbesondere zur Betätigung einer Verstellkinematik zur Veränderung der Richtung des Luftstromes, ausgebildet ist, der auf der Lamelle (5) längsverschiebbar angeordnet ist und dem aus dieser Lamelle (5) Licht zuführbar ist.

10. Luftausströmer (1) nach einem der vorhergehenden Ansprüche, **dadurch gekennzeichnet, dass** dem Bauelement und/oder dem Lagerelement (11) Licht aus einer Lichtleitfaser zuführbar ist, in die aus der Lichtquelle Licht einkoppelbar ist.

11. Luftausströmer (1) nach einem der vorhergehenden Ansprüche, **dadurch gekennzeichnet, dass** die Lichtquelle als Leuchtdiode ausgebildet ist.

12. Luftausströmer (1) nach einem der vorhergehenden Ansprüche, **dadurch gekennzeichnet, dass** die Lichtquelle Licht der Farbe weiß und/oder gelb und/oder orange und/oder grün und/oder rot und/oder blau emittiert.

13. Luftausströmer (1) nach einem der vorhergehenden Ansprüche, **dadurch gekennzeichnet, dass** das lichtleitfähige Material zumindest teilweise farbig ist.

14. Luftausströmer (1) nach einem der vorhergehenden Ansprüche, **dadurch gekennzeichnet, dass** das Bauelement und/oder das Lagerelement (11) zumindest teilweise mit einem lichtundurchlässigen Lack lackiert ist.

15. Luftausströmer (1) nach Anspruch 14, **dadurch gekennzeichnet, dass** der lichtundurchlässige Lack an mindestens einer Stelle von dem Bauelement entfernt ist.

16. Luftausströmer (1) nach einem der vorhergehenden Ansprüche, **dadurch gekennzeichnet, dass** das Bauelement und/oder das Lagerelement (11) mindestens eine lichtundurchlässige Materialkomponente enthält.

## Claims

1. An air outlet (1) comprising at least one component that is visible from a space to be ventilated by the air outlet (1), and that can be wetted by an air flow that can be output through the air outlet (1), wherein the component is formed, at least partially, of a light-conductive material, and light can be directed toward said component, wherein a housing (7) containing a light source is disposed on the component and/or on the support element (11), **characterized in that** the housing (7) includes a light-conductive prism (8) for decoupling light, and the component and/or the support element (11) include a plug-in device (9) for coupling light, and which is suitable for accommodating the prism (8).

2. The air outlet (1) according to claim 1, **characterized in that** the component is designed as an air duct (2).

3. The air outlet (1) according to claim 2, **characterized in that** the air duct (2) is designed as an elongated hollow body having open ends and has an axis (3.1) that is oriented in the normal direction to a longitudinally situated symmetry axis, it being possible for the air duct (2) to swivel about the axis (3.1), wherein the axis (3.1) can be a component of the air duct (2).

4. The air outlet (1) according to one of the preceding claims, **characterized in that** a device (4) for influencing a direction of the air flow is provided on a side of the air outlet (1) facing the space to be ventilated, wherein the component is designed as a fin (5) of this device (4).

5. The air outlet (1) according to claim 4, **characterized in that** the fin (5) has a longitudinally disposed axis (3.2) about which it can swivel, wherein the axis (3.2) can be a component of the fin (5).

6. The air outlet (1) according to one of the claims 3 through 5, **characterized in that** light can be directed to the component on an end face of at least one end of the axis (3.1, 3.2).

7. The air outlet (1) according to one of the claims 3 through 6, **characterized in that** light can be directed to the component via another surface of at least one end of the axis (3.1, 3.2).

8. The air outlet (1) according to one of the claims 3 through 7, **characterized in that** the axis (3.1, 3.2) is supported in an at least partially light-conductive support element (11), to which light can be directed.

9. The air outlet (1) according to one of the claims 4 through 8, **characterized in that** the component is designed as a sliding adjusting knob (6), in particular for operating an adjusting kinematic mechanism to change the direction of the air flow, the sliding adjusting knob (6) being disposed on the fin (5) in a longitudinally displaceable manner, and to which light can be directed out of the fin (5).

10. The air outlet (1) according to one of the preceding claims, **characterized in that** light from an optical fiber can be directed to the component and/or the support element (11), it being possible to couple light from the light source into the optical fiber.

11. The air outlet (1) according to one of the preceding claims, **characterized in that** the light source is designed as a light-emitting diode.

12. The air outlet (1) according to one of the preceding claims, **characterized in that** the light source emits light of the color white and/or yellow and/orange and/or green and/or red and/or blue.

13. The air outlet (1) according to one of the preceding claims, **characterized in that** the light-conductive material is at least partially colored.

14. The air outlet (1) according to one of the preceding claims, **characterized in that** the component and/or the support element (11) is painted at least partially with a light-impermeable paint.

15. The air outlet (1) according to claim 14, **characterized in that** the light-impermeable paint is removed from the component at at least one point.

16. The air outlet (1) according to one of the preceding claims, **characterized in that** the component and/or the support element (11) contain at least one light-impermeable material component.

## Revendications

1. Diffuseur d'air (1) comprenant au moins un composant qui est visible à partir d'un espace devant être ventilé par le diffuseur d'air (1) et qui peut être baigné par un flux d'air pouvant circuler à travers le diffuseur d'air (1), où le composant est formé au moins partiellement par un matériau photoconducteur, et de la lumière peut être fournie à ce composant, où un boîtier (7) est disposé sur le composant et / ou sur l'élément support (11), boîtier dans lequel est disposée une source de lumière,
**caractérisé en ce que** le boîtier (7) présente un prisme (8) photoconducteur servant au découplage de la lumière, et le composant et / ou l'élément support (11) présente un dispositif d'emboîtement (9) servant au couplage de la lumière, dispositif d'emboîtement qui est approprié pour le logement du prisme (8).

2. Diffuseur d'air (1) selon la revendication 1, **caractérisé en ce que** le composant est configuré comme un conduit d'air (2).

3. Diffuseur d'air (1) selon la revendication 2, **caractérisé en ce que** le conduit d'air (2) est configuré comme un corps creux allongé à extrémités ouvertes et présente un axe (3.1) orienté dans une direction verticale par rapport à un axe de symétrie s'étendant longitudinalement, axe autour duquel le conduit d'air peut pivoter, où l'axe (3.1) peut être une pièce faisant partie du conduit d'air (2).

4. Diffuseur d'air (1) selon l'une quelconque des revendications précédentes, **caractérisé en ce qu'**il est prévu, sur un côté du diffuseur d'air (1), tourné vers l'espace à ventiler, un dispositif (4) servant à influencer une direction du flux d'air, où le composant est configuré comme une lamelle (5) de ce dispositif (4).

5. Diffuseur d'air (1) selon la revendication 4, **caractérisé en ce que** la lamelle (5) présente un axe (3.2) disposé longitudinalement, axe autour duquel la lamelle peut pivoter, où l'axe (3.2) peut être une pièce faisant partie de la lamelle (5).

6. Diffuseur d'air (1) selon l'une quelconque des revendications 3 à 5, **caractérisé en ce que** la lumière peut être fournie au composant, sur une surface frontale d'au moins une extrémité de l'axe (3.1, 3.2).

7. Diffuseur d'air (1) selon l'une quelconque des revendications 3 à 6, **caractérisé en ce que** la lumière peut être fournie au composant, par une autre surface d'au moins une extrémité de l'axe (3.1, 3.2).

8. Diffuseur d'air (1) selon l'une quelconque des revendications 3 à 7, **caractérisé en ce que** l'axe (3.1, 3.2) est logé dans un élément support (11) au moins partiellement photoconducteur, élément support auquel de la lumière peut être fournie.

9. Diffuseur d'air (1) selon l'une quelconque des revendications 4 à 8, **caractérisé en ce que** le composant est configuré comme un bouton de réglage à curseur (6), en particulier servant à commander une cinématique de réglage permettant la modification de la direction du flux d'air, bouton de réglage à curseur qui est disposé en pouvant coulisser longitudinalement sur la lamelle (5) et auquel peut être fournie de la lumière provenant de cette lamelle (5).

10. Diffuseur d'air (1) selon l'une quelconque des revendications précédentes, **caractérisé en ce que** de la lumière provenant d'une fibre optique peut être fournie au composant et / ou à l'élément support (11), fibre optique dans laquelle peut être couplée de la lumière provenant de la source de lumière.

11. Diffuseur d'air (1) selon l'une quelconque des revendications précédentes, **caractérisé en ce que** la source de lumière est configurée comme une diode électroluminescente.

12. Diffuseur d'air (1) selon l'une quelconque des revendications précédentes, **caractérisé en ce que** la source de lumière émet de la lumière de couleur blanche et / ou jaune et / ou orange et / ou verte et / ou rouge et / ou bleue.

13. Diffuseur d'air (1) selon l'une quelconque des revendications précédentes, **caractérisé en ce que** le matériau photoconducteur est au moins partiellement en couleur.

14. Diffuseur d'air (1) selon l'une quelconque des revendications précédentes, **caractérisé en ce que** le composant et / ou l'élément support (11) est verni au moins partiellement avec un vernis opaque.

15. Diffuseur d'air (1) selon la revendication 14, **caractérisé en ce que** le vernis opaque, au moins au niveau d'un emplacement, est enlevé du composant.

16. Diffuseur d'air (1) selon l'une quelconque des revendications précédentes, **caractérisé en ce que** le composant et / ou l'élément support (11) comporte au moins un composant de matière opaque.
